# EUROPEAN PATENT SPECIFICATION

(11) **EP 1 813 508 B1**
(45) Date of publication and mention of the grant of the patent: **24.08.2011**
(21) Application number: 07001639.9
(22) Date of filing: 25.01.2007
(51) Int. Cl.: B62D 5/04, F16H 55/24

(54) **Steering apparatus**
Lenkvorrichtung
Dispositif de direction

(30) Priority: 27.01.2006 KR 20060009010
(43) Date of publication of application: 01.08.2007
(73) Proprietor: Mando Corporation, Pyeongtaek-si, Gyeonggi-do (KR)
(72) Inventor: Choi, Jung Rak 402-704, Suji-gu, Yongin Si, Gyeonggi-do (KR)
(74) Representative: Bosch, Matthias

(56) References cited:
- EP-A- 1 591 346
- EP-A2- 1 468 897
- GB-A- 2 358 899
- US-A- 1 633 415
- US-A- 5 934 144
- SCHOO A ET AL: "SCHNECKENGETRIEBE MIT SPIELEINSTELLBARER VERZAHNUNG" ANTRIEBSTECHNIK, VEREINIGTE FACHVERLAGE, MAINZ, DE, vol. 30, no. 4, 1 April 1991 (1991-04-01), pages 94-97, XP000217829 ISSN: 0722-8546

## Description

### FIELD OF THE INVENTION

The present invention relates to a steering apparatus which includes: a worm; a first worm wheel engaged with the worm and a second worm wheel formed to be concentric with the firm worm wheel and engaged with the worm, so as to relatively rotate with respect to the first worm wheel, where the first worm wheel includes a pressing mechanism for applying a desired pressure to the second worm wheel, the second worm wheel including a guide member to which the pressing mechanism applies the pressure.

Such devices are known, in identical or similar form, from EP 1 468 897 A2, EP 1 591 346 A2 and US 5,934,144.

### BACKGROUND OF THE INVENTION

Generally hydraulic power steering apparatuses using hydraulic pressure of a hydraulic pump have been used as power steering apparatuses for vehicles. Since the 1990's, electric power steering apparatuses using an electric motor have been eventually popularized.

In a conventional hydraulic steering apparatus, a hydraulic pump, which is a power source providing power for the hydraulic steering apparatus, is operated by the engine of a vehicle, and always consumes energy regardless of the rotation of a steering wheel. In an electric power steering apparatus, on the other hand, if a steering wheel rotates and generates torque, an electric motor provides assistant steering power in proportion to generated steering torque.

Therefore, when the electric power steering apparatus is used, it is possible to improve energy efficiency in comparison with the hydraulic power steering apparatus.

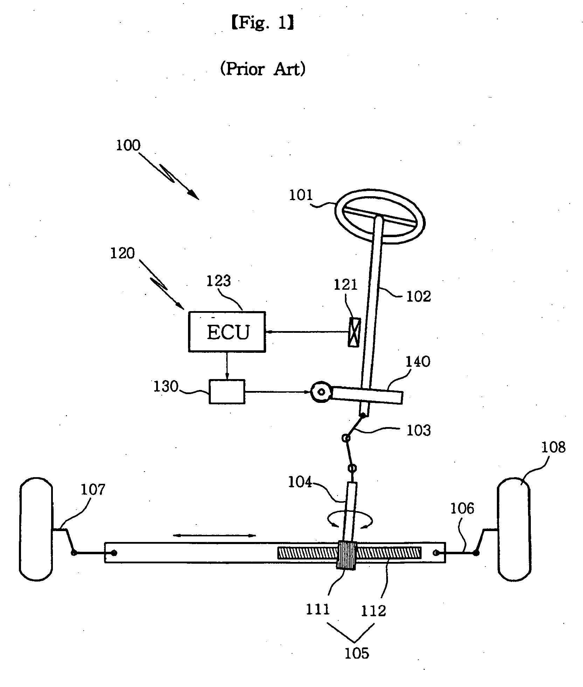

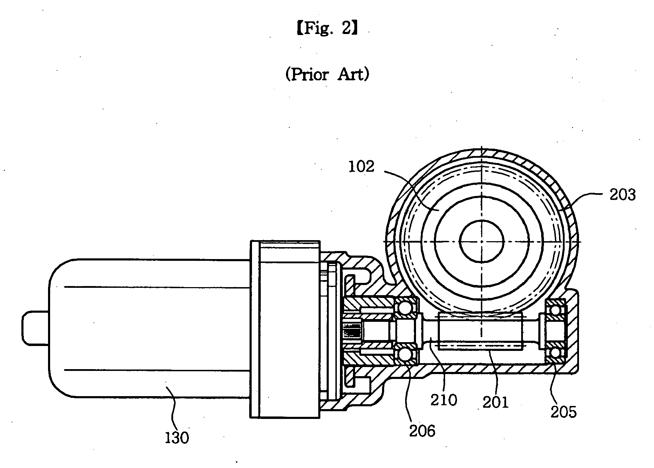

FIG. 1 is a view showing a configuration of the conventional electric power steering apparatus for a vehicle, and FIG. 2 is a sectional view showing the conventional reduction gear.

As shown in FIGS. 1 and 2, the conventional electric power steering apparatus includes a steering system 100 extending from a steering wheel 101 to both wheels 108, and an assistant power mechanism 120 for providing assistant steering power to the steering system 100.

The steering system 100 includes a steering shaft 102 having an upper end connected to the steering wheel 101 to rotate along with the steering wheel 101, and a lower end connected to a pinion shaft 104 by a pair of universal joints 103. Further, the pinion shaft 104 is connected to a rack bar through a rack-pinion mechanism 105, while both ends of the rack bar are connected to both wheels of the vehicle by tie rods 106 and knuckle arms 107, respectively.

The rack-pinion mechanism 105 has a pinion gear 111 mounted on the lower end of the pinion shaft 104, and a rack gear 112 formed on a peripheral surface of the rack bar and engaged with the pinion gear 111. The rotation movement of the pinion shaft 104 is converted into the straight movement of the rack bar through the rack-pinion mechanism 105. Accordingly, when a driver operates the steering wheel 101, the pinion 104 rotates, and the rack bar moves straight in an axis direction as the pinion 104 rotates. The straight movement of the rack bar enables the tie rods 106 and the knuckle arms 107 to steer the wheels 108.

The assistant power mechanism 120 includes a torque sensor 121 for sensing torque applied to the steering wheel 101 by the driver so as to output an electric signal in proportion to the sensed torque, an electronic control unit 123 for generating a control signal depending on the electric signal transmitted from the torque sensor 121, an electric motor 130 for generating assistant steering power based on the control signal transmitted from the electronic control unit 123, and a reduction gear 140 including a worm 201 and a worm wheel 203, in order to transmit the assistant steering power from the electric motor 130 to the steering shaft 102.

The reduction gear 140 includes a worm shaft 210 having both ends supported by bearings 205 and 206, and a worm 201 formed on an outer peripheral surface of the worm shaft 210. The worm 201 is engaged with a worm wheel 203 formed on the peripheral surface of the steering shaft 102, and the worm shaft 210 is driven by the electric motor 130.

Accordingly, in the electric power steering apparatus, the torque generated by the rotation of the steering wheel 101 is transmitted through the rack-pinion mechanism 105 to the rack bar. The assistant steering power which the electric motor 130 generates depending on the generated torque, is transmitted to the rack bar by means of the reduction gear 104. In other words, the rack bar is moved along an axis thereof by the steering torque generated in the steering system 100 and the assistant steering power generated from the electric motor 130.

In such a conventional reduction gear, the teeth of the worm 201 and the worm wheel 203 are worn resulting from the steering operation during the driving of the vehicle as time lapses. Further, as being made entirely of synthetic resin, the worm wheel 203 may shrink in the winter in which ambient temperature is lowered.

In a case where the teeth of the worm 201 and the worm wheel 203 are worn or the worm wheel 203 shrinks, a gap occurs between the teeth of the worm 201 and the worm wheel 203. As a result, there is a problem in that backlash occurs in the teeth engagement of the worm 201 and the worm wheel 203. Such a problem occurs in a gear ratio adjustable steering apparatus provided with a worm and a worm wheel, as well as an electric power steering apparatus.

### SUMMARY OF THE INVENTION

Accordingly, the present invention has been made to solve a particular problem occurring in the prior art, and it is an object of the present invention to provide a steering apparatus in which an operating torque can be adjusted up to which any backlash is avoided.

In order to accomplish the object of the present invention, there is provided a steering apparatus according to claim 1.

### BRIEF DESCRIPTION OF THE DRAWINGS

The above and other objects, features and advantages of the present invention will be more apparent from the following detailed description taken in conjunction with the accompanying drawings, in which
FIG. 1 is a view showing a configuration of the conventional electric power steering apparatus;
FIG. 2 is a sectional view showing the conventional reduction gear;
FIG. 3 is a perspective view showing a part of a steering apparatus according to a first embodiment;
FIG. 4 is an exploded perspective view showing a main portion of a worm wheel;
FIG. 5A is a partial sectional view showing the first and second worm wheels before they rotate;
FIG. 5B is a partial sectional view showing the first and second worm wheels after they rotate;
FIG. 6 is an exploded perspective view showing the worm wheel of a steering wheel according to a second embodiment according to the present invention; and
FIG. 7 is a cross-sectional view showing the worm wheel of the steering wheel according to the second embodiment of the present invention.

### DETAILED DESCRIPTION OF THE PREFERRED EMBODIMENTS

Hereinafter, the preferred embodiment of the present invention will be described in detail with reference to the accompanying drawings. The same reference numerals denote identical structural elements throughout the accompanying drawings. In the following description of the present invention, a detailed description of known functions and configurations incorporated herein is omitted to avoid making the subject matter of the present invention unclear.

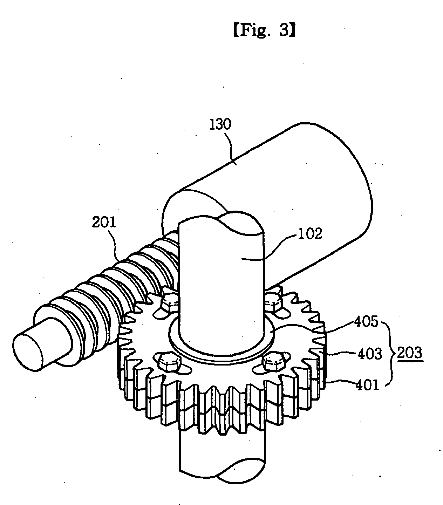

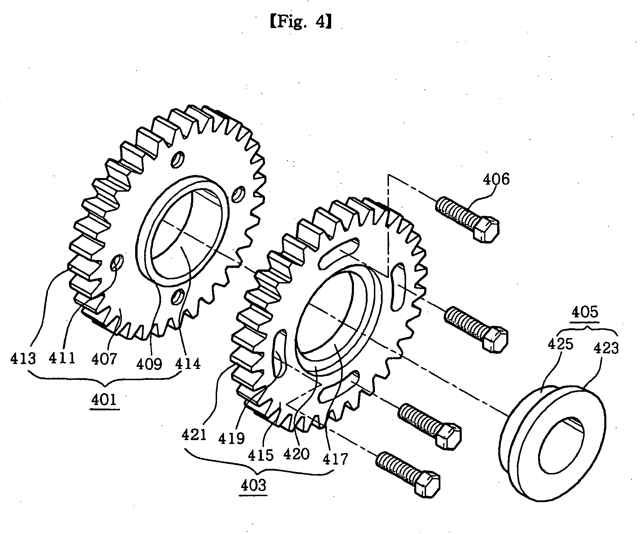

FIG. 3 is a perspective view showing a part of a steering apparatus according to a first embodiment and FIG. 4 is an exploded perspective view showing a main portion of a worm wheel.

As shown in FIGS. 3 and 4, the steering apparatus according to the first embodiment includes an electric motor 130, a worm 201 transmitting rotation force of the electric motor 130, and a worm wheel 203 engaged with the worm 201 to enclose a steering shaft 102.

In the case of the conventional electric power steering apparatus, the steering shaft 102 is formed to satisfy a single gear ratio. On the other hand, in the case of the gear ratio conversion type steering apparatus, the gear ratio is changed by means of a planetary gear assembly. The present invention can be applied to any one of the above-mentioned steering apparatus.

The worm wheel 203 includes the first worm wheel 401, the second worm wheel 403, a coupling plug 405, and coupling means 406.

The first worm wheel 401 includes the first body portion 407, a guide jaw 409, and the first coupling holes 411.

The first body portion 407 has a cylindrical shape with a regular diameter, and is coupled to the steering shaft 102. Further, the first wheel gear teeth 413 are formed on the peripheral surface of the first body portion 407, and are engaged with the worm 201 so as to receive rotation force of the electric motor 130.

The guide jaw 409 guides the first worm wheel 401 when the first worm wheel 401 relatively rotates with respect to the second worm wheel 403. The guide jaw 409 has a cylindrical shape and extends in an axis direction of the first body portion 407. Specifically, when the first worm wheel 401 relatively rotates with respect to the second worm wheel 403, the outer peripheral surface of the guide jaw 409 makes contact with the inner peripheral surface of a guide hole 417 of the second worm wheel 403, so that the first and second worm wheels 401 and 403 cannot move radially.

Further, the guide jaw 409 has an insertion hole 414 formed therein, into which an insertion jaw 425 of the coupling plug 405 is inserted.

The first coupling holes 411 are formed at a predetermined distance on a circumference around the center portion of the first body portion 407. The first and second worm wheels 401 and 403 are coupled with each other by means of the coupling means 406 inserted into the first coupling hole 411.

The second worm wheel 403 includes the second body portion 415, a guide hole 417, the second coupling holes 419 and a mounting groove 420.

The second body portion 415 has a cylindrical shape with a regular diameter like the first body portion 407 of the first worm wheel 401, and is coupled to the steering shaft 102. Further, the second body portion 415 has the second wheel gear teeth 421 formed on the outer peripheral surface of the second body portion 415.

The guide hole 417 is formed at the center portion of the second body portion 415, in which the guide jaw 409 of the first worm wheel 401 is inserted and rotates.

The second coupling holes 419 are formed at a predetermined distance on a circumference around the center portion of the second body portion 415. On the other hand, the first worm wheel 401 and the second worm wheel 403 are coupled with each other by means of the coupling means 406 inserted in the first coupling holes 411 and extending through the second coupling holes 419.

Meanwhile, unlike the first coupling holes 411, the second coupling holes 149 have an oblong shape, so that the coupling position of the coupling means 406 can be changed. Accordingly, the second worm wheel 403 can be relatively rotated with respect to the first worm wheel 401.

The mounting groove 420 is concavely formed around the guide hole 417, and has a diameter larger than that of the guide hole 417. The flange portion 423 of the coupling plug 405 is press-fitted to the mounting groove 420, so as to enable the first worm wheel 401 to be rigidly coupled with the second worm wheel 403.

The coupling plug 405 is used for maintaining the rigid coupling of the first and second worm wheels 401 and 403, and includes the flange portion 423 and the insertion jaw 425.

The flange portion 423 is formed at a rear portion of the insertion jaw 425, and is radially expanded. The flange portion 423 is seated on the mounting groove 420 of the second worm wheel 403, while the insertion jaw 425 has a cylindrical shape with a regular diameter, and is inserted into the guide jaw 409 of the first worm wheel 401.

In other words, the insertion jaw 425 extending through the guide hole 417 of the second worm wheel 403 is inserted into the guide jaw 409, so as to maintain the rigid coupling of the first and second worm wheels 401 and 403. Meanwhile, the flange portion 423 formed at the rear portion of the insertion jaw 425 is seated on the mounting groove 420 of the second worm wheel 403, resulting in the coupling plug 405 being coupled with the second worm wheel 403.

The coupling means 406 simultaneously extends through the first and second coupling holes 411 and 419 and couples the first worm wheel 401 to the second worm wheel 403. Bolts are generally used as the coupling means 406, but the coupling means is not limited to the bolts.

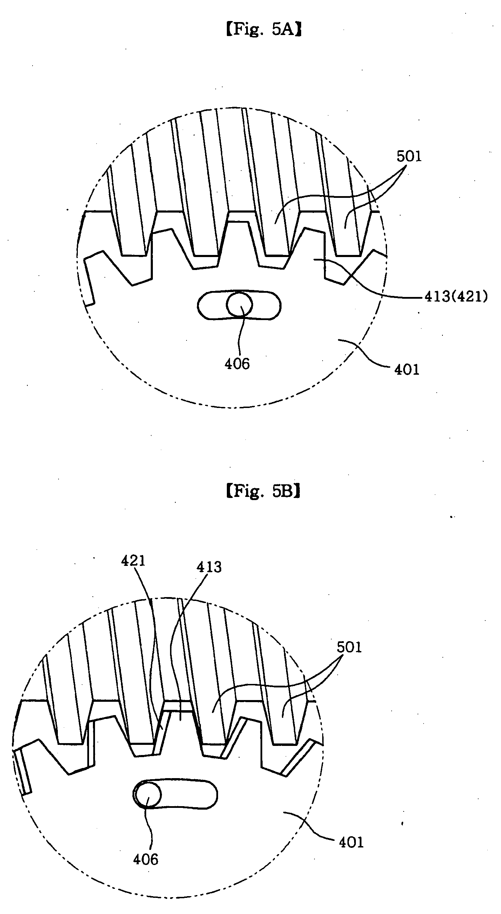

FIGS. 5A and 5B are partial sectional views showing the first and second worm wheels before and after the first worm wheel relatively rotates with respect to the second worm wheel, respectively.

As shown in FIG. 5A, there occurs backlash between the worm gear teeth 501 and the first and second wheel gear teeth 413 and 421. In this case, the first and second wheel gear teeth 413 and 421 have an identical teeth arrangement like a single gear teeth arrangement.

When the first worm wheel 401 rotates clockwise to a desired angle after the coupling of the coupling means 406 is released, the first wheel gear teeth 413 move clockwise by a predetermined distance. As a result, it is possible to remove the backlash existing between the first and second wheel gear teeth 413 and 421 and the worm gear teeth 501.

Specifically, in a case where the first and second wheel gear teeth 413 and 421 initially have the same teeth arrangement, the backlash occurs between the first and second wheel gear teeth 413 and 421 and the worm gear teeth 501. However, as the first worm wheel 401 relatively rotates to the second worm wheel 403, the first and second worm wheels 401 and 403 have the different teeth arrangements. As a result, the backlash between the first and second wheel gear teeth and the worm gear teeth 501 can be avoided.

When the backlash is removed, the coupling means 406 is coupled to the first and second worm wheels 401 and 403 so as to rigidly couple the first worm wheel 401 to the second worm wheel 403, resulting in the complete removal of the backlash.

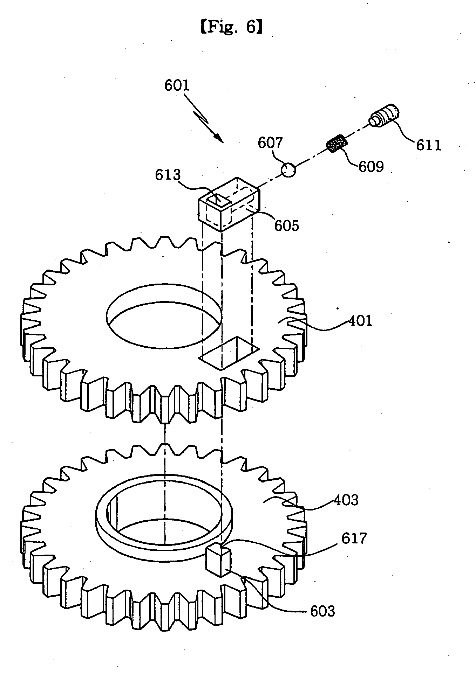

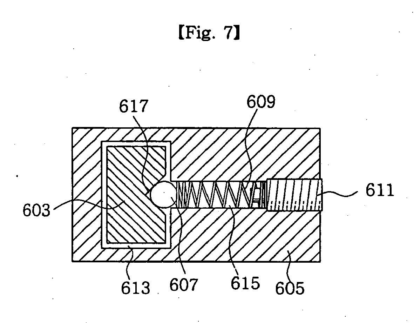

FIG. 6 is an exploded perspective view showing the worm wheel of a steering wheel according to a second embodiment according to the present invention, and FIG. 7 is a cross-sectional view showing the worm wheel of the steering wheel according to the second embodiment of the present invention.

As shown in FIGS. 6 and 7, the worm wheel of the steering apparatus according to the second embodiment of the present invention includes the first worm wheel 401, the second worm wheel 403, a pressing mechanism 601 and a guide member 603.

The pressing mechanism 601 includes a mechanism body portion 605, a steel ball 607, an elastic body 609, and a control member 611.

The mechanism body portion 605 has a guide portion receiving hole 613 formed at a side thereof, in which the guide member 603 is inserted, and a thru-hole 615 formed therein to communicate the guide portion insertion hole 613 with the outside.

The thru-hole 615 receives the elastic body 609 and the control member 611 inserted therein. The male screw of the control member is engaged with a female screw formed on the inner peripheral surface of the thru-hole 615. Accordingly, the control member 611 moves forward and backward while rotating, so as to change pressure applied to the elastic body 609.

The elastic body 609 applies predetermined pressure to the guide member 603 so that the first worm wheel 401 relatively rotates with respect to the second worm wheel 403. Further, the control member 611 is located at the rear of the elastic body 609 to control the pressure applied to the elastic body 609. A compressed spring or rubber with a desired elasticity may be used as the elastic body 609.

The steel ball 607 is disposed in front of the elastic body 609 and makes contact with a concave portion 617 of the guide member 603. Since the existence of the steel ball 607 causes the elastic body 609 not to make contact with the guide portion 603, it is possible to prevent damage or wear in the elastic body 609. Further, when elastic force of the elastic body 609 is adjusted through the rotation of the control member 611, the steel ball 607 makes point-to-point contact with the concave portion 617. In this case, the elastic force of the elastic body 609 can be finely adjusted, as compared with surface-to-surface contact of the steel ball and the concave portion.

The pressure applied to the elastic body 609 is controlled using the control member 611, so that the rotation force of the second worm wheel 403 can be adjusted. The front end of the control member 611 supports the elastic body 609. Further, the control member 611 has a male screw formed on the outer peripheral surface thereof, which is engaged with the female screw formed on the inner peripheral surface of the thru-hole 615. Meanwhile, the rear of the control member 611 may have a hexagonal or cruciform tool insertion portion in which a tool is inserted.

The pressing mechanism 601 having such a structure and the first worm wheel may be separately formed or integrated with each other.

The guide member 603 receives the elastic force from the elastic body 609 to enable the second worm wheel 403 to relatively rotate with respect to the first worm wheel 401.

The guide member 603 is formed on the upper surface of the second worm wheel 403, and is inserted into the guide portion inserting hole 613 of the pressing mechanism 601. Furthermore, the guide member 603 has the concave portion 617 formed by a desired depth on a surface thereof. The steel ball 607 makes contact with the concave portion 617. Preferably, the concave portion 617 has a character V shape, but the shape of the concave portion 617 is not limited to the character V shape.

In the steering apparatus with the above-mentioned structure according to the second embodiment of the present invention, the first worm wheel 401 is subjected to a desired elastic force and relatively rotates with respect to the second worm wheel 403. As a result, backlash between the worm and the worm wheel can be removed. Further, when the worm wheel is worn so that the backlash occurs, the control member 611 rotates and enables the elastic force of the elastic body 609 to be changed, thereby also removing the occurring backlash.

Since the steering apparatus according to the second embodiment of the present invention has the same structure and operation as those of the steering apparatus according to the first embodiment, the same reference numerals are used to denote the same elements, and the detailed description of the structure and operation of the steering apparatus according to the present invention has been omitted.

According to the present invention as described above, since the first and second worm wheels relatively rotate with respect to each other, there is an advantage in that backlash between the worm and the worm wheel can be avoided.

Although preferred embodiments of the present invention have been described for illustrative purposes, those skilled in the art will appreciate that various modifications, additions and substitutions are possible, without departing from the scope of the invention as disclosed in the accompanying claims.

The features disclosed in the foregoing description, in the claims and/or in the accompanying drawings may, both separately and in any combination thereof, be material for realising the invention in diverse forms thereof.

## Claims

1. A steering apparatus (100) comprising:
a worm (201);
a first worm wheel (401) engaged with the worm (201) and
a second worm wheel (403) formed to be concentric with the first worm wheel (401) and engaged with the worm (201), so as to relatively rotate with respect to the first worm wheel (401),
where the first worm wheel (401) includes a pressing mechanism (601) for applying a desired pressure to the second worm wheel (403), the second worm wheel (403) including a guide member (603) to which the pressing mechanism applies the pressure,
**characterized in that**
the pressing mechanism (601) includes an elastic body (609) and a body portion (605), in which the elastic body (609) is received,
the body portion (605) has a thru-hole (615) in which a female screw is formed on the inner peripheral surface, and a control means is assembled with the body portion (615) in such a manner that a male screw (611) of the control means is engaged with the female screw of the body portion (605),
the guide member (603) has a concave portion (617) with a desired depth, and a steel ball is disposed between the elastic body (609) and the concave portion (617).

2. The steering apparatus as claimed in claim 1, wherein the first worm wheel (401) has a first coupling hole (411) formed in the first worm wheel (401), and the second worm wheel (403) has a second coupling hole (419) formed to have a circular arc shape, the first and second worm wheels being coupled with each other by means of coupling means (406) extending through the first and second coupling holes.

3. The steering apparatus as claimed in claim 2, wherein the first worm wheel (401) has a guide jaw (409) formed at the center portion of the first worm wheel (401), and the second worm wheel (403) has a guide hole (417) formed at the center portion of the second worm wheel (403), in which the guide jaw (409) is inserted.

4. The steering apparatus as claimed in claim 3, further comprising a coupling plug (405) press-fitted to the second worm wheel (403) while being inserted into the guide jaw (409), wherein the coupling plug (405) has a flange portion (423) formed at the rear end of the coupling plug (405), and the second worm wheel (403) has a mounting groove (420) formed therein, in which the flange portion (423) is seated.

## Patentansprüche

1. Lenkvorrichtung (100) mit:
einer Schnecke (201);
einem ersten Schneckenrad (401), das mit der Schnecke (201) in Eingriff steht; und
einem zweiten Schneckenrad (403), das so ausgebildet ist, dass es mit dem ersten Schneckenrad (401) konzentrisch ist, und das mit der Schnecke (201) in Eingriff steht, um sich in Bezug auf das erste Schneckenrad (410) relativ zu drehen,
wobei das erste Schneckenrad (401) einen Druckmechanismus (601) zum Aufbringen eines gewünschten Drucks auf das zweite Schneckenrad (403) aufweist, wobei das zweite Schneckenrad (403) ein Führungsteil (603) aufweist, auf das der Druckmechanismus den Druck aufbringt,
**dadurch gekennzeichnet, dass**
der Druckmechanismus (601) einen elastischen Körper (609) und einen Körperabschnitt (605) aufweist, in dem der elastische Körper (609) aufgenommen ist,
der Körperabschnitt (605) eine Durchgangsbohrung (615) aufweist, in der ein Innengewinde an der inneren Umfangsfläche ausgebildet ist, und mit dem Körperabschnitt (615) eine Steuereinrichtung derart zusammengefügt ist, dass ein Außengewinde (611) der Steuereinrichtung mit dem Innengewinde des Körperabschnitts (605) in Eingriff steht,
das Führungsteil (603) einen konkaven Abschnitt (617) mit einer gewünschten Tiefe hat, und eine Stahlkugel zwischen dem elastischen Körper (609) und dem konkaven Abschnitt (617) angeordnet ist.

2. Lenkvorrichtung nach Anspruch 1, wobei das erste Schneckenrad (401) ein erstes Kopplungsloch (411) aufweist, das in dem ersten Schneckenrad (401) ausgebildet ist, und wobei das zweite Schneckenrad (403) ein zweites Kopplungsloch (419) aufweist, das so ausgebildet ist, dass es eine Kreisbogenform hat, wobei das erste und das zweite Schneckenrad miteinander mittels einer Kopplungseinrichtung (406) verbunden sind, die sich durch das erste und das zweite Kopplungsloch erstreckt.

3. Lenkvorrichtung nach Anspruch 2, wobei das erste Schneckenrad (401) eine Führungsbacke (409) aufweist, die an dem Mittelabschnitt des ersten Schneckenrads (401) ausgebildet ist, und wobei das zweite Schneckenrad (403) ein Führungsloch (417) aufweist, das an dem Mittelabschnitt des zweiten Schneckenrads (403) ausgebildet ist, und in das die Führungsbacke (409) eingesetzt ist.

4. Lenkvorrichtung nach Anspruch 3, die des Weiteren einen Kopplungsstecker (405) aufweist, der mit Presssitz an dem zweiten Schneckenrad (403) angebracht ist, während er in die Führungsbacke (409) eingesetzt wird, wobei der Kopplungsstecker (405) einen Flanschabschnitt (423) aufweist, der an dem hinteren Ende des Kopplungssteckers (405) ausgebildet ist, und wobei in dem zweiten Schneckenrad (403) eine Befestigungsnut (420) ausgebildet ist, in der der Flanschabschnitt (423) sitzt.

## Revendications

1. Appareil de direction (100) comprenant :
une vis sans fin (201) ;
une première roue à vis sans fin (401) engagée avec la vis sans fin (201)
et
une deuxième roue à vis sans fin (403) formée de manière à être concentrique avec la première roue à vis sans fin (401) et engagée avec la vis sans fin (201), de façon à tourner relativement par rapport à la première roue à vis sans fin (401),
où la première roue à vis sans fin (401) inclut un mécanisme de pressage (601) pour appliquer une pression désirée à la deuxième roue à vis sans fin (403), la deuxième roue à vis sans fin (403) incluant un élément guide (603) auquel le mécanisme de pressage applique la pression,
**caractérisé en ce que**
le mécanisme de pressage (601) inclut un corps élastique (609) et une partie de corps (605), dans laquelle le corps élastique (609) est reçu,
la partie de corps (605) comporte un trou traversant (615) dans lequel une vis femelle est formée sur la surface périphérique intérieure, et un moyen de commande est assemblé avec la partie de corps (605) de telle manière qu'une vis mâle (611) du moyen de commande est engagée avec la vis femelle de la partie de corps (605),
l'élément guide (603) a une partie concave (617) avec une profondeur désirée, et une bille d'acier est disposée entre le corps élastique (609) et la partie concave (617).

2. Appareil de direction selon la revendication 1, dans lequel la première roue à vis sans fin (401) a un premier trou de couplage (411) formé dans la première roue à vis sans fin (401), et la deuxième roue à vis sans fin (403) a un deuxième trou de couplage (419) formé de manière à avoir une forme d'arc de cercle, la première et la deuxième roues à vis sans fin étant couplées l'une avec l'autre au moyen d'un moyen de couplage (406) s'étendant à travers le premier et le deuxième trous de couplage.

3. Appareil de direction selon la revendication 2, dans lequel la première roue à vis sans fin (401) a une mâchoire guide (409) formée au niveau de la partie centrale de la première roue à vis sans fin (401), et la deuxième roue à vis sans fin (403) a un trou de guidage (417) formé au niveau de la partie centrale de la deuxième roue à vis sans fin (403), dans lequel la mâchoire guide (409) est insérée.

4. Appareil de direction selon la revendication 3, comprenant en outre une bague de couplage (405) ajustée par pression sur la deuxième roue à vis sans fin (403) tout en étant insérée dans la mâchoire guide (409), dans lequel la bague de couplage (405) a une partie de rebord (423) formée au niveau de l'extrémité arrière de la bague de couplage (405), et la deuxième roue à vis sans fin (403) a une rainure de montage (420) formée dans celle-ci, dans laquelle la partie de rebord (423) est logée.
